# EUROPEAN PATENT APPLICATION

(11) **EP 4 492 204 A1**
(43) Date of publication of application: **15.01.2025**
(21) Application number: 23306174.6
(22) Date of filing: 10.07.2023
(51) Int. Cl.: G06F 3/01, A47C 15/00

(54) **HAPTIC DEVICE COMPRISING INCLINED HAPTIC ACTUATORS**

(71) Applicant: Go Touch VR, 59000 Lille (FR)
(72) Inventor: VEZZOLI, Eric, 59000 LILLE (FR)
(74) Representative: RVDB

(57) **Abstract**

There is provided a haptic device comprising at least a pair of haptic actuators (21, 22) comprising a first haptic actuator (21) and a second haptic actuator (22), the first and second haptic actuators (21, 22) being arranged inclined relative to one another at a determined angle, the haptic device further comprising a first sheet element (211) associated with the first haptic actuator (21) and a second sheet element (221) associated with the second haptic actuator (22), the first sheet element (211) being independent from the second sheet element (221) to activate a same body part or different body parts independently from each other.

## Description

### FIELD

The present application generally relates to the field of haptic and, in particular, to haptic device(s), also known as haptic feedback device(s), configured to render haptic effect(s) on one or more parts of a user's body.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments and includes tactile haptic technology. Tactile haptic feedback (or tactile haptic effect) refers to sensations such as vibration, friction, or micro-deformation, which may be obtained using a haptic device, which corresponds to, or comprises, an arrangement of one or more haptic actuators. For example, vibrotactile effects might be obtained with the use of haptic devices such as ERMs (Eccentric Rotating Mass), LRAs (Linear Resonant Actuators), large bandwidth actuators like VCM (Voice Coil Motors), PZT (Piezoelectric Actuators), pneumatic actuators, SMA (Shape Memory Alloy) actuators or EAP (Electroactive Polymer) actuators.

Haptic feedback finds application in many domains and is for example commonly used in arcade games and in virtual reality systems to increase the feeling of immersion. A person willing to experiment haptic feedback has to wear or use one or more haptic devices, which needs to be comfortable to increase user's acceptance. The integration of haptic actuators, such as vibrotactile actuators, in haptic device to be worn by a user may be a source of discomfort for the user.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a haptic device comprising a set of haptic actuators, wherein the set of haptic actuators comprises at least a pair of haptic actuators comprising a first haptic actuator and a second haptic actuator, the first and second haptic actuators being arranged inclined relative to one another at a determined angle,
the haptic device further comprising a first sheet element associated with the first haptic actuator and a second sheet element associated with the second haptic actuator, the first sheet element being independent from the second sheet element,
the first sheet element being configured to transmit a first effect rendered by the first haptic actuator to a first body part and the second sheet element being configured to transmit a second effect rendered by the second haptic actuator to a second body part.

In an exemplary embodiment, the first and second haptic actuators being at a distance from each other, the first haptic actuator having a first actuating axis, the second haptic actuator having a second actuating axis, the first actuating axis intersecting with the second actuating axis to form the determined angle, the first and second haptic actuators being arranged symmetrically one to each other with regard to a bisector of the determined angle.

In an exemplary embodiment, the first actuating axis forming a first angle with the bisector, the second actuating axis forming a second angle with the bisector, the first angle and the second angle being adjacent angle each comprised between 40 and 50°.

In an exemplary embodiment, the first haptic actuator and the second haptic actuator are horizontally aligned.

In a further exemplary embodiment, the first sheet element and the second sheet element each comprising a first face and a second face opposite to the first face, the first face of the first sheet element being fixed to the first haptic actuator and the second face of the first sheet element being configured to be in contact with the first body part and adhere with the first body part, the first face of the second sheet element being fixed to the second haptic actuator and the second face of the second sheet element being configured to be in contact with the second body part and adhere with the second body part.

In another exemplary embodiment, the haptic device comprising foam configured to support a set of body parts comprising the first and second body parts, the first and second haptic actuators being each arranged in an opened cavity formed into the foam, the opened cavity having an opening oriented toward the outside of the haptic device, at least a part of the opening being closed with respectively the first and second sheet elements.

In an additional exemplary embodiment, the first and second sheet elements are each fixed to an interface element interfacing the first and second sheet elements with the foam.

In another exemplary embodiment, an elastic joint is arranged along an inner contour of the opened cavity on a side of the opening, the elastic joint joining an inner contour of the opened cavity to an outer contour of each sheet element in a resting position of each sheet element.

In an exemplary embodiment, the interface element and the elastic joint are configured to allow a displacement of each sheet element between the resting position and an activation position, the displacement being generated by a movement of each haptic actuator.

In a further exemplary embodiment, the first and second sheet elements are each fixed to an interface element interfacing the first and second sheet elements with the foam.

In an additional exemplary embodiment, the first and second haptic actuators each corresponds to a vibrotactile actuator.

In a further exemplary embodiment, the first and second body parts correspond to a same body part of a body model.

In an exemplary embodiment, the first and second body parts each refer to a back of a user.

In an additional exemplary embodiment, the haptic device corresponds to a chair, to a chair cover, to a back rest, to a back rest cover or to a haptic vest.

According to a second aspect of the present application, a method of using the haptic device according to the first aspect of the present application is disclosed.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic perspective representation of a haptic device, in accordance with at least one exemplary embodiment;
**Figure 2** shows a schematic arrangement of a pair of haptic actuators comprised in the haptic device of figure 1, in accordance with at least one exemplary embodiment;
**Figure 3** shows a first schematic sectional representation of a part of the haptic device of figure 1 comprising a haptic actuator, in accordance with at least one exemplary embodiment;
**Figure 4** shows a second schematic sectional representation of a part of the haptic device of figure 1 comprising a haptic actuator, in accordance with at least one exemplary embodiment;
**Figure 5** shows a third schematic sectional representation of a part of the haptic device of figure 1 comprising a haptic actuator, in accordance with at least one exemplary embodiment;
**Figure 6** shows a fourth schematic sectional representation of a part of the haptic device of figure 1 comprising a haptic actuator, in accordance with at least one exemplary embodiment;
**Figure 7** shows a schematic representation of some elements of the part of the haptic device represented on figures 5 and 6, in accordance with at least one exemplary embodiment.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to a haptic device comprising a plurality of haptic actuators, and more specifically one or more pairs of haptic actuators each comprising a first haptic actuator and a second haptic actuator. The first and second haptic actuators of a pair of haptic actuators are arranged inclined relative to one another at a determined angle. A first sheet element is associated with the first haptic actuator and a second sheet element, which is independent from the first sheet element, is associated with the second haptic actuator. The first sheet element is configured to transmit a first effect rendered by the first haptic actuator to a first body part of a body model and the second sheet element is configured to transmit a second effect rendered by the second haptic actuator to a second body part of the body model.

The first body part and the second body part may be a same body part or different body parts of the body model.

The first effect and the second effect may be rendered independently from each other to a user via the first and second sheet elements and associated first and second haptic actuators.

The inclined arrangement of the first and second haptic actuators forming a pair of haptic actuators enables for example to obtain a combined haptic effect (from the first effect and the second effect), e.g., a haptic effect converging on a specific area of the body of the user.

The haptic device is configured to be at least locally in contact with one or more parts of a user's body through at least the first and second sheet elements. Part(s) of the haptic device may for example rest against the one or more parts of the user's body.

The haptic device corresponds for example to a chair, a back rest, a chair cover, a back rest cover or a haptic vest.

Other examples of equipment or apparatus that may correspond to the haptic device include head mounted display devices (HMD, see-through glasses), wireless (e.g., Bluetooth^{®}) connected wearable haptic devices, mousepad, palm rest, wrist rest for the mouse, wrist rest for the keyboard, headphones padded foam, chair, desk, XR headset, headphones, bracelet, head and/or lumbar support device or chair, a haptic suit or any other device suitable for rendering haptic effect(s) onto one or more parts of the user's body being in contact with the haptic device.

A haptic actuator corresponds to a device configured to generate or produce mechanical motion or force from a source of energy that can be electrical, pneumatic or hydraulic. A haptic actuator may comprise a rotary motor (e.g., for rotating mass actuators such as ERM) or a linear motor (e.g., for linear actuators such as LRA).

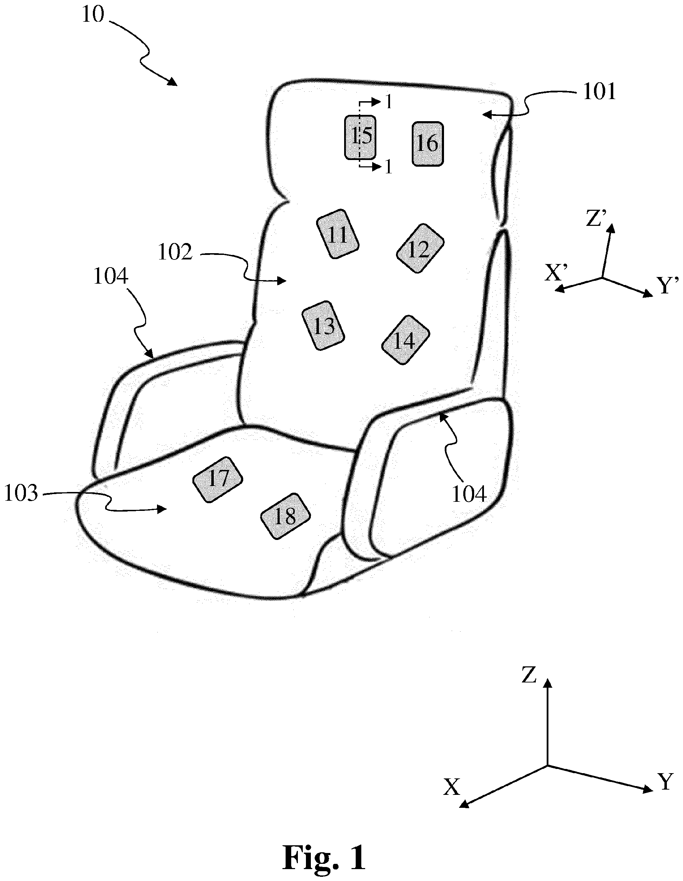

**Figure 1** illustrates a schematic partially perspective view of an exemplary embodiment of a haptic device.

The haptic device according to the example of figure 1 corresponds to a chair 10, e.g., a gaming seat, a theater seat, an operator seat, a vehicle seat, etc.

Naturally, the haptic device is not limited to a chair but extends to any haptic device comprising at least two haptic actuators, e.g., a haptic vest or suit, a chair cover (i.e., a haptic gear configured to be arranged on at least a part of a chair (for example the back) not comprising any haptic actuator for example).

The chair 10 is represented in a perspective view in an orthonormal coordinate system represented with orthonormal axis X, Y and Z.

The chair 10 advantageously incorporates one or more haptic actuators each configured to render one or more haptic effects onto a body part of a user's body stimulated by the haptic actuator.

The haptic actuators may be arranged in different parts or elements of the chair 10 each supporting or resting one or more user's body parts, e.g., in the headrest 101, backrest 102, seat 103, armrest 104 and/or leg rest.

Each haptic actuator is associated with a sheet element that is configured to be in contact with the body part to be stimulated by the haptic actuator.

The sheet element corresponds to an arrangement of one or more layers or sheets that is configured to transmit the movements or vibrations generated by the haptic actuator to the body part. The sheet element comprises a first face and second face opposite to the first face. The haptic actuator is for example fixed to the first face of the sheet element and the second face is configured to be in contact with the body part, the second face being in a determined material configured to adhere to the body part (e.g., the skin of the user or clothes worn by the user). The sheet element corresponds for example to a plate acting as an interface between the haptic actuator resting against the first face or surface of the sheet element and the body part resting against the second face or surface of the sheet element.

The sheet element may be of any shape, for example corresponding to a rectangle, a square, a circle, an oval.

The arrangement made of a haptic actuator and a sheet element associated with the haptic actuator is called "haptic unit" hereinafter.

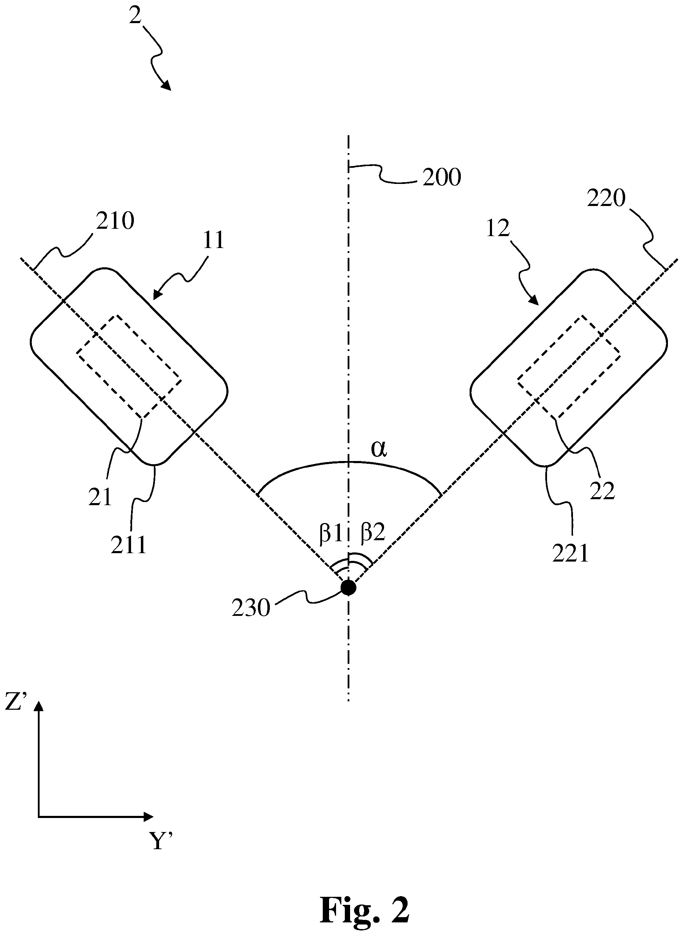

According to the specific example of figure 1, 2 haptic units 15, 16 are arranged in the headrest 101 in such a way to be in contact with the neck of a user seating in the chair 10, 4 haptic units 11 to 14 are arranged in the backrest 102 in such a way to be in contact with the back of a user seating in the chair 10 and 2 haptic units 17, 18 are arranged in the seat 103, for example in such a way to be in contact with the upper part of the legs of a user seating in the chair 10.

The chair 10 may comprise any number of haptic actuators / haptic units, for example 1, 2, 5, 10, 20 or more haptic actuators / haptic units.

At least some of the haptic actuators (or haptic units) may be arranged by pair(s) of haptic actuators (respectively haptic units), each pair of haptic actuators (respectively haptic units) being composed of 2 haptic actuators (respectively haptic units). A haptic actuator (respectively haptic unit) may belong to a single pair of haptic actuators (respectively haptic units) or to a plurality of haptic actuators (respectively haptic units), e.g., 2 pairs.

A local orthonormal coordinate system may be associated with one or more pairs of haptic actuators (respectively haptic units) in such a way that the actuating axis of the haptic actuators of the one or more pairs of haptic actuators (respectively haptic units) belong to a same plane defined by 2 axes of the local orthonormal coordinate system. For example, the local orthonormal coordinate system represented with orthonormal axis X', Y' and Z' is associated with the pair of haptic units 11, 12 and the pair of haptic units 13, 14 arranged in the backrest 102. One or more axes of the local X', Y', Z' orthonormal coordinate system may be identical to corresponding axes of the global X, Y, Z orthonormal coordinate system.

A pair of haptic actuators (and corresponding haptic units) is for example composed of 2 haptic actuators being arranged horizontally (i.e., according to the Y or Y' axis) or vertically (i.e., according to the Z or Z' axis).

According to the exemplary embodiment of figure 1, haptic units 11 and 12 are horizontally aligned (the haptic actuator comprised in the haptic unit 11 being aligned with the haptic actuator comprised in the haptic unit 12 according to the Y' axis) and form a first pair of haptic units, and haptic units 13 and 14 are horizontally aligned (the haptic actuator comprised in the haptic unit 13 being aligned with the haptic actuator comprised in the haptic unit 14 according to the Y' axis) and form a second pair of haptic units.

The haptic device 10 comprises advantageously one or more pairs of haptic actuators (and corresponding haptic units) whose actuators are arranged inclined relative to each other at a determined angle.

For example, the pair of haptic actuators of the haptic units 11, 12 comprises a first haptic actuator and a second haptic actuator arranged inclined relative to one another at a first determined angle.

In a same way, the pair of haptic actuators of the haptic units 13, 14 comprises a first haptic actuator and a second haptic actuator arranged inclined relative to one another at a second determined angle. The second determined angle may for example be identical to the first determined angle or may be different from the first determined angle.

The first sheet element associated with the first haptic actuator of a specific pair of haptic actuators is advantageously independent from the second sheet element associated with the second haptic actuator of the specific pair of haptic actuators. Such an arrangement enables to transmit the effect(s) (forces, vibrations, movements) produced by the first haptic actuator to a first body part through the sheet element in contact with this first body part independently from the effect(s) produced by the second haptic actuator to a second body part through the second sheet element in contact with this second body part.

The first and second body parts may be a same body part or different body parts, for example according to the type of the body model or to the granularity level of the body model. The body model corresponds to a schematic representation of the body of a user.

Depending on how the body of the user is represented or defined through a body model, the first and second haptic actuators of a pair of haptic actuators may target a same body part or 2 different, potentially complementary, body parts.

For example, the back of a user may be represented with one or several body parts, according to the body model.

The back may be represented with a single body part called "back". According to this example, the first and second haptic actuators of the first pair of haptic units 11, 12 refer to or target a single and same body part, i.e., the back. In a same way, the first and second haptic actuators of the second pair of haptic units 13, 14 also refer to or target the same single body part, i.e., the back.

According to another example, the back of a user may be represented with 2 different body parts, namely a "upper back" and a "lower back". According to this another example, the first and second haptic actuators of the first pair of haptic units 11, 12 refer to or target a single and same first body part, i.e., the upper back. The first and second haptic actuators of the second pair of haptic units 13, 14 also refer to or target a single and same second body part, i.e., the lower, but that is different from the first body part.

According to a further example, the back of a user may be represented with 4 different body parts, namely a "left upper back", "right upper back", "left lower back" and "right lower back". According to this further example, the first and second haptic actuators of the first pair of haptic units 11, 12 refer to or target 2 different body parts, i.e., respectively the "right upper back" and the "left upper back". The first and second haptic actuators of the second pair of haptic units 13, 14 refer to or target 2 different body parts, i.e., respectively the "right lower back" and the "left lower back".

The inclination angle between the first and second haptic actuators of a pair is for example chosen in such a way that the directions of the effects generated by the first and second haptic actuators converge toward a determined area of the body of the user, as illustrated on Figure 2.

**Figure 2** illustrates a schematic arrangement 2 of a pair of haptic actuators, in accordance with exemplary embodiments.

The arrangement 2 of figure 2 corresponds to a front view of the pair of haptic units 11, 12 of figure 1, for example according to the axis X' of the local coordinate system X', Y', Z' associated with this pair of haptic units 11, 12.

The haptic unit 11 comprises a first haptic actuator 21 and a first sheet element 211 associated with the first haptic actuator 21. The haptic unit 12 comprises a second haptic actuator 22 and a second sheet element 221 associated with the second haptic actuator 22.

A first actuating axis 210 is associated with the first haptic actuator 21 and a second actuating axis 220 is associated with the second haptic actuator 22.

A actuating axis corresponds to the axis according to which a mobile element of the haptic actuator is moved to generate the effect (e.g., vibration). Regarding rotating mass actuators such as ERM, the actuating axis corresponds to the rotation axis of the rotating element of the haptic actuator. Regarding linear actuators such as LRA, VCM and PZT, the actuating axis corresponds to the translation axis according to which the translating element of the haptic actuator moves.

The direction of the translation movement of a translating mobile element of the haptic actuator along the actuating axis may be in the positive or in the negative direction along the actuating axis. The direction of the circular movement of a rotating element of the haptic actuator around the actuating axis may be in clockwise direction or counterclockwise direction. For example, ERM-like actuators may be arranged with its rotating axis perpendicular to the longest direction of the sheet element associated with the ERM-like actuator so that the acceleration profile benefits from the association of the sheet element with the ERM-like actuator.

The term "direction" includes the orientation of the axis, also referred to as vector direction. A vector aligned with a specific direction may be either in the positive direction along the axis or the negative direction along the axis. The term "direction" may distinguish between all angles in a circle, such as 0 to 360 degrees (0 to 360°).

According to the example of figure 2, the first and second sheet elements 211, 221 have a rectangular shape and extend according to the actuating axis 210 of the first haptic actuator 21 and the actuating axis 220 of the second haptic actuator 22, respectively. According to this example, the first sheet element 211 is oriented in a same direction as the first haptic actuator 21 and the second sheet element is oriented in a same direction as the second haptic actuator 22.

The first and second sheet elements 211, 221 may be of other shapes, for example a square, a circle, an oval and may be oriented in another direction relative to the first and second haptic actuators 21, 22, respectively.

The first and second haptic actuators are arranged in such a way that the actuating axis 210 of the first haptic actuator 21 and the actuating axis 220 of the second haptic actuator 22 form an angle α. The angle α may be comprised between 80° and 100° and is for example equal to 90°.

The first actuating axis 210 intersects the second actuating axis 220 at a point 230. An angle β1 is formed between the first actuating axis 210 and the bisector 200 of angle α. An angle β2 is formed between the bisector 200 of angle α and the second actuating axis 220.

The angles β1 and β2 are for example each comprised between 40° and 50°. According to a specific embodiment, the angle β1 equals β2 (meaning that angles β1 and β2 are adjacent angles), β1 and β2 being for example equal to 45°.

According to this example, the first and second haptic actuators 21, 22 are arranged at a distance from each other and symmetrically one to each other with regard to the bisector 200 of the angle α or with regard to a plane of symmetry comprising the bisector 200.

The bisector 200 may for example be aligned first and second haptic actuators 21,22.

β1 and β2 may be of different values, for example with a difference between β1 and β2 angles that may be comprised between 1° and 5° or 10°. Such a difference is for example due to manufacturing tolerance of the haptic device 10 comprising the first and second haptic actuators 21, 22 or due to the move of the first haptic actuator 21 and/or second haptic actuator 22 over time with respect to their original position.

For the same reasons, the intersection between the first actuating axis 210 the second actuating axis 220 may move or displace over time.

According to this example, the first and second haptic actuators 21, 22 are not positioned perfectly symmetrically one to each other with regard to the bisector 200 of the angle α, a dissymmetry appearing for example over time.

According to the non-limiting example of figure 2, the first and second haptic actuators 21, 22 are aligned on horizontal axis X'. The convergence point 230 or convergence area is directed downwards considering that the vertical axis Z' is oriented upright, the bisector 200 being for example parallel to the vertical axis Z'. In other words, the ordinate of the convergence point (according to the vertical axis Z') is less than the ordinates of the points comprised in each of the first and second haptic actuators 21, 22.

According to another example, the convergence point 230 or convergence area is directed upwards.

The convergence point 230 or convergence area may also be directed to the right or to the left (considering the horizontal axis X' oriented to the right on figure 2), or to any direction in the plane defined by the axes X' and Z', meaning that the axis or plane of symmetry between the first and second haptic actuators 21, 22, if any, is not according to the vertical axis Z'.

The pair of haptic actuators 21, 22 is for example configured to be associated with the back of a user to activate two different parts of the back, a first part being activated via the haptic unit 11 and a second part being activated via the haptic unit 12.

According to another example, the pair of haptic actuators 21, 22 is configured to be associated with the chest of a user (the haptic device corresponding for example to a haptic suit) to activate two different parts of the chest, a first part being activated via the haptic unit 11 and a second part being activated via the haptic unit 12.

According to the exemplary embodiment of Figure 1, the arrangement of the first and second haptic actuators 21, 22 of the haptic units 11, 12 is the same arrangement as the arrangement of the first and second haptic actuators of the haptic units 13, 14, only the location of the haptic actuators and the parts of the body of the user seating in the chair 10 varying between these pairs of haptic actuators. The angle formed by the actuating axis of the haptic actuators of the haptic units 11, 12 is equal to the angle formed by the actuating axis of the haptic actuators of the haptic units 13, 14, the convergence point or area being oriented downward for both pairs of haptic actuators. The haptic actuator of the haptic unit 11 is arranged parallel to (or essentially parallel to) the haptic actuator of the haptic unit 13 and haptic actuator of the haptic unit 12 is arranged parallel to (or essentially parallel to) the haptic actuator of the haptic unit 14.

According to another exemplary embodiment, the pair of haptic actuators of haptic units 11, 12 and the pair of haptic actuators of haptic units 13, 14 may be arranged in such a way that their respective actuating axis converge to a same point or same area. The convergence direction of actuating axes of haptic actuators of haptic units 11, 12 may be downwards along axis Z' while convergence direction of actuating axes of haptic actuators of haptic units 13, 14 may be upwards along axis Z'.

According to a further exemplary embodiment, the convergence direction of actuating axes of haptic actuators of haptic units 11, 12 may be opposite to the convergence direction of actuating axes of haptic actuators of haptic units 13, 14 (for example upwards along axis Z' for the haptic actuators of haptic units 11, 12 and downwards along axis Z' for haptic actuators of haptic units 13, 14).

The converging direction of the actuating axes of a pair of haptic actuators is for example according to the body part(s) targeted by the effect generated by the haptic actuators.

The haptic actuators of haptic units 15, 16 may be arranged parallel to each other. In a same way, the haptic actuators of haptic units 17, 18 may be arranged parallel to each other.

Each part or element of the chair 10 supporting at least a part of user's body, i.e., the headrest 101, the backrest 102, the seat 103 and the armrests 104 may comprise foam, which is for example coated with a coating material adapted to be in contact with body part(s) of a user, such as textile, natural leather or synthetic leather.

Within the meaning of these principles, the foam included in the chair corresponds to any high elastically deformable material suitable for supporting the user's body or a part of user's body. Such a foam may deform when on contact with the user and return to its previous or original shape when it is not in contact with the user.

The foam material (e.g., polyurethane, latex), structure and/or foam properties (e.g., density, resilience) may for example vary from a haptic device to another one, or from a part to another part of a same haptic device. For example, the foam material used in a chair may be different from the foam material used in a headset because the pressure exerted by the part of the user's body on the contact surface area is different (as the force and surface area are different). In another example, the foam material comprised in the seat 103 of the chair 10 may be different from the foam material comprised in the headrest 101 or in the armrests 104.

The foam corresponds for example to expanded polyurethane, silicon, shape memory foam, gel, polyurethane foam, PVC (Polyvinyl Chloride) foam, polyethylene foam, polystyrene foam, rubber foam (e.g., caoutchouc), nitrile butadiene rubber (NBR), ethylene propylene diene monomer (EPDM), or TPE (Thermoplastic Elastomer) foam.

In an exemplary embodiment, the haptic units 11 to 18 may be arranged on the coating covering the chair 10, the haptic actuator of a haptic unit being arranged between the coating of the chair 10 and the sheet element of this haptic unit in such a way that the user's body rests on the sheet element when the user seats in the chair. According to a variant, each haptic unit may further comprise a housing embedding the haptic actuator, the housing being opened at a face, the opening being closed with the sheet element. The haptic actuator may be arranged in the housing in such a way to be at a distance of each wall of the housing (i.e., with no contact with the walls), the haptic actuator being fixed to the inner surface of the sheet element (the inner surface being opposite to the outer surface in contact with the body part), the sheet element being linked to the housing in such a way as to be able to move with regard to the housing.

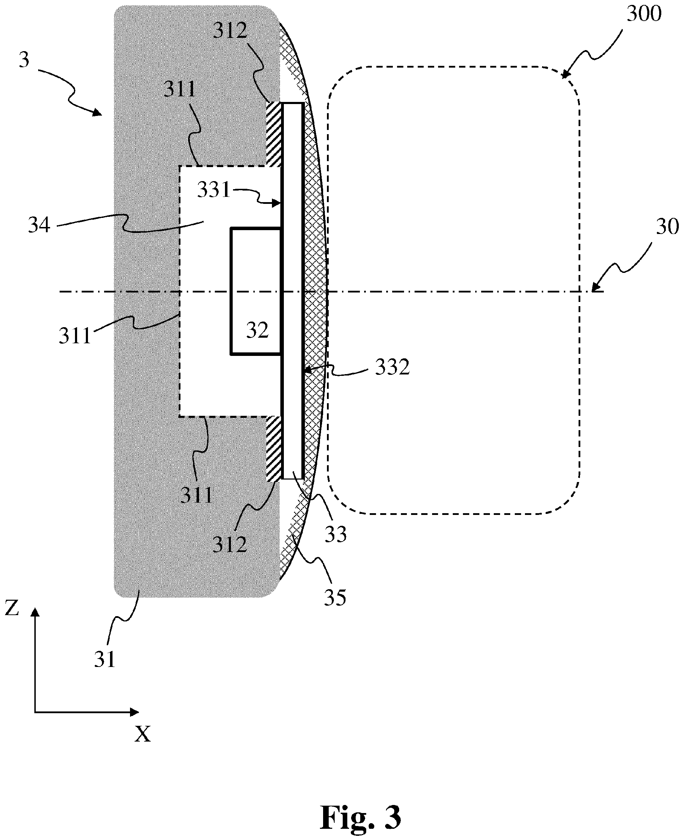

In other exemplary embodiments described with more detail hereinafter with regard to figures 3 to 7, the haptic actuators of the haptic units 11 to 18 are integrated or embedded into the structure of the chair in such a way that the sheet elements of the haptic units 11 to 18 may form part of the coating of the chair.

**Figure 3** illustrates a schematic fragmentary sectional view of a part of the haptic device 10 comprising a haptic unit 3, in accordance with an exemplary embodiment.

The figure 3 corresponds to a sectional view of the haptic device 10 in the plane formed by axis X and Z of the orthonormal coordinate system (X,Y,Z) taken along axis 1-1 of figure 1.

Figure 3 shows a body part 300 of a user resting against the haptic unit 3.

The haptic unit 3 comprises an element 31, which corresponds to the foam assembly comprised in the backrest 102. The element 31 is called "foam" hereinafter.

The foam 31 forms a cavity 34 corresponding to a recess or chamber dug or bored into the foam 31. The cavity 34 is opened at one face, i.e., the face oriented toward the outside of the haptic device, i.e., the face oriented toward the body part 300.

The cavity 34 may be of any shape, for example corresponding to a cylinder, a half-sphere, a parallelepiped, a cuboid.

The haptic unit 3 also comprises a first sheet 33 (as a part of the sheet element or corresponding to the sheet element of the haptic unit) arranged to close the opening of the cavity 34.

The first sheet 33 corresponds for example to a plate acting as an interface between the haptic actuator 32 of the haptic unit 3 resting against the inner face or surface 331 of the first sheet 33 and the body part 300 resting against the foam 31 and the haptic unit 3.

The first sheet 33 may be of any shape, for example corresponding to a rectangle, a square, a circle, an oval.

According to the non-limiting example of figure 3, a peripheral area of the inner surface of the first sheet 33 rests against an outer peripheral area 312 of the foam 31, the outer peripheral area 312 surrounding the opening of the cavity 34 and being illustrated with diagonal stripes on figure 3.

The inner surface 331 of the first sheet 33 is advantageously adapted or configured to slide on the foam 31 when the haptic actuator 32 is actuated and moves the first sheet 33.

The first sheet 33 is advantageously fixed to an interface element 35 that is configured to interface the first sheet 33 with the haptic device 10, for example with the foam 31.

The first sheet 33 is fixed to the interface element 35 in a way to not adhere to the foam 31, the arrangement comprising the haptic actuator 32, the first sheet 33 and the foam 31 being configured to enable a movement or vibration of the first sheet 33 (generated by the haptic actuator 32) while avoiding or minimizing the transfer of energy from the first sheet 33 to the foam 31. It enables to optimize or maximize the transfer of the vibration from the haptic actuator 32 to the user body part via the first sheet 33 and the interface element 35.

The first sheet 33 is for example glued to the interface element 35 via the outer surface 332 of the first sheet 33, which ensures to keep the first sheet 33 in position.

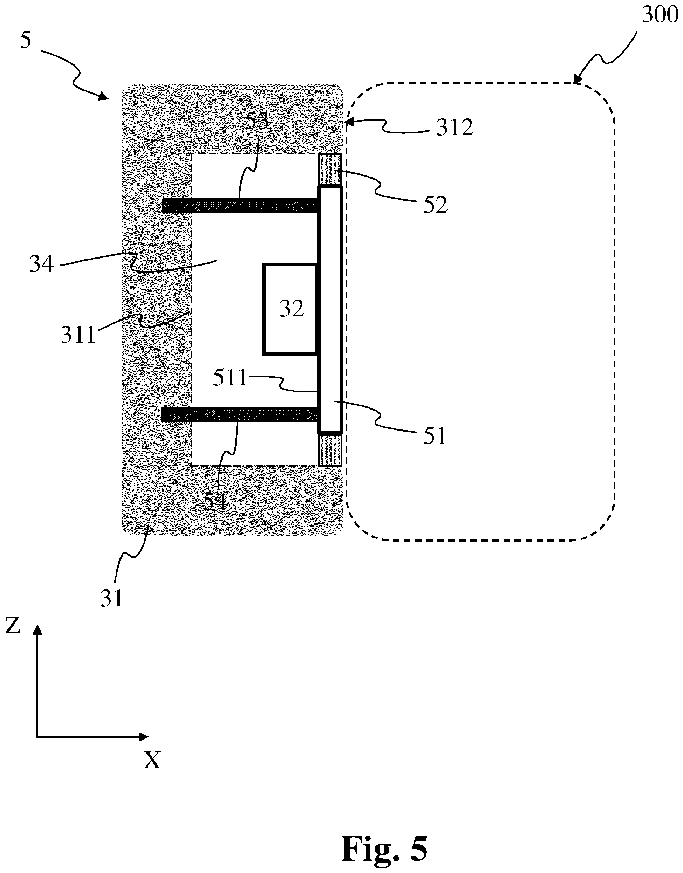

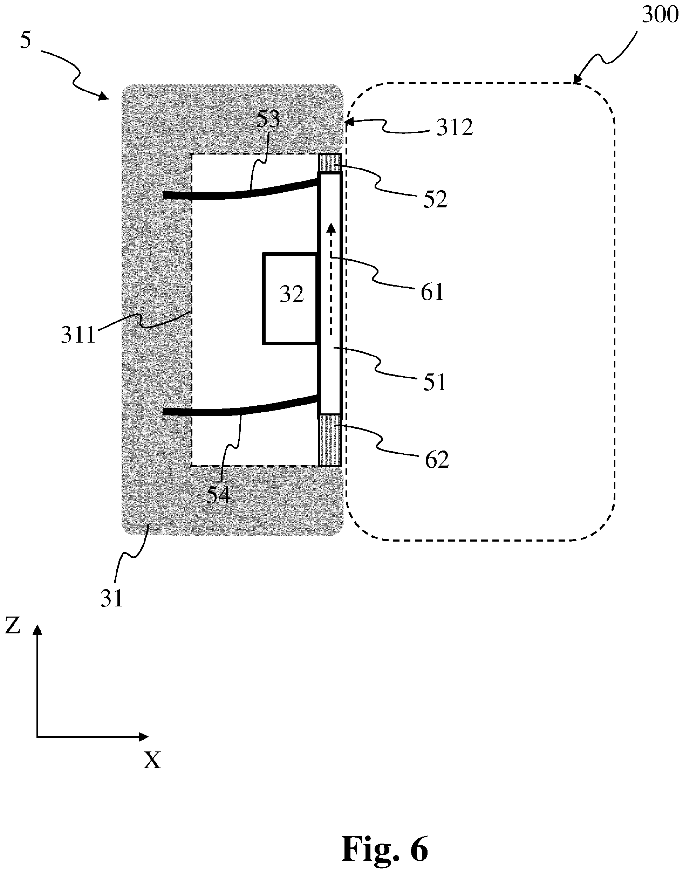

The interface element may be part of the sheet element and corresponds for example to:
- an element 35 having a size greater than the size of the first sheet 33 and fixed to the foam 31, for example by adhesive bonding or anchored to the foam with mechanical fastening, at the periphery of the interface element 35;
- a cover of the haptic device 10 coating notably the foam 31, the cover being for example a tissue, a plastic material, or natural or synthetic leather; and/or
- at least one flexible element 53, 54 as described hereinafter with regard to figures 5 and 6.

The first sheet 33 may be made in any material adapted to transfer vibrations and/or forces generated by the haptic actuator 32 to the user body part 300. The first sheet 33 is for example made of a rigid material, e.g., plastic, wood, resin or metal.

The surface finish of the outer surface of the interface element 35 (which is in contact with the user body part 300) is for example adapted to improve adherence between the first sheet and the user body part 300, in order to improve the vibration transfer to the user body part 300. Depending on the material of the first sheet and the outer surface finishing, the friction coefficient between the outer surface of the interface element 35 and the skin of the user body part 300 is for example between 0.4 and 0.8.

The haptic actuator 32 is configured to generate vibration along one or more axis, for example along a longitudinal axis 20 (according to X axis) and/or along a transversal axis (according to Z axis) of the haptic actuator 32. Vibrations generated by the haptic actuator 32 are transferred to the first sheet 33 following one or several directions, depending on:
- the elastic characteristics of the first sheet 33 (material coefficient of elasticity and shape);
- the link mechanical properties between the first sheet 33 and the foam 31; and/or
- the link mechanical properties between the haptic actuator 32 and the first sheet 33.

The haptic actuator 32 is for example glued to the first sheet 33 inner surface 331, the haptic actuator 32 staying within the cavity 34 far from the walls (made of foam 31) defining the opened cavity 34, i.e., at a distance of the inner surface 311 of the walls, called foam inner surface 311. For example, haptic actuator 32 is centered on first sheet 33 internal surface 331, a gap separates the actuator from foam 31. The dimension of the gap is defined in such a way as to avoid any contact between the haptic actuator 32 and the walls of the cavity 34, including when the actuator vibrates and when the user body part 300 is leaning against, and compressing, the foam 31.

The haptic actuator 32 is for example glued to the first sheet 33 by adhesive bonding or anchored with any mechanical fastening known to the skilled person in the art.

The distance between the haptic actuator 32 and the foam inner surface 311 is for example comprised between 2 and 40 mm, depending for example on the size of the haptic actuator 32. For example, the greater the size of the haptic actuator 32, the greater the size of the cavity 34 and the greater of the distance between the outer surface of the haptic actuator 32 and the inner surface of the cavity 34.

The size of the haptic actuator 32 is for example comprised between 2x2x2 mm and 45x20x20 mm, depending for example on the sensitivity of the body part the haptic actuator 32 is associated with. For example, the sensitivity of the legs or the back of a user is lower than the sensitivity of the user's hands. The sensation of a haptic effect on the legs or on the back requires a haptic actuator with greater size than the size of a haptic actuator for the sensation of a haptic effect on the hands. For example, a higher acceleration or a larger amplitude of the displacement of the haptic actuator 32 movement is needed when generating a haptic effect on the legs or the back compared to the acceleration or amplitude of the displacement for a haptic effect to be sensed by the hands.

Size and/or shape of the cavity 34 depend for example on the size/shape of the haptic actuator 32, on the location of the haptic unit 3 in the haptic device 10 and/or on the type of the haptic device 10.

The size of the first sheet 33 depends on the size of the opening of the cavity 34. When the first sheet 33 has a rectangular shape (respectively circular shape), the height (respectively the diameter) of the first sheet 33 (along the Z axis) is for example comprised between 10 and 40 mm. The thickness of the first sheet 33 depends for example on the material of the first sheet 33 and is for example comprised between 0.5 to 2 mm.

The haptic actuator 32 is for example controlled and powered by a controller arranged in the haptic device 10, the haptic actuator being for example connected to the controller via wired connection (not shown). The controller is for example connected to a haptic engine, e.g., a computer, via a wired or a wireless connection. The controller receives, from the haptic engine, haptic signal(s) transporting haptic data (e.g., amplitude and frequency) representative of the haptic effect to be generated by the haptic actuator 32. The controller controls the haptic actuator 32 according to the received haptic signal(s).

According to a first example, the haptic actuator 32 is for example controlled to generate vibrations according to an axis orthogonal to the longitudinal axis 20 of the haptic actuator 32 (for example along the Z axis and/or the Y axis). The vibrations are for example generated by the movement of an inertial mobile element of the haptic actuator 32 in translation along to the one or more axis orthogonal to the longitudinal axis 30. Thanks to the inertia of the mobile element in movement inside the haptic actuator, the haptic actuator moves and drives the first sheet 33 to which it is hooked. As the first sheet 33 is thin and large, the first sheet 33 is flexible. The first sheet 33 moves or translates (and eventually deforms) consequently according to the movement of the mobile element of the haptic actuator 32, while the peripheral part of the first sheet 33 slides on the outer peripheral area 312 of the foam 31. The movement of the mobile element of the haptic actuator 32 makes the first sheet 33 locally vibrating or oscillating for example according to the Z axis, depending on the frequency and amplitude of the driving haptic signal received by the haptic actuator 32.

According to a second example, the haptic actuator 32 is for example controlled to generate vibrations according to the longitudinal axis 30 of the haptic actuator 32, i.e., according to the X axis. The first sheet 33 moves or deforms accordingly, i.e., according to the X axis.

According to a third example, the haptic actuator 32 is for example controlled to generate vibrations according to the longitudinal axis 30 of the haptic actuator 32 and according to one or more axis orthogonal to the longitudinal axis 30 of the haptic actuator 32, for example according to the Z and/or Y axis.

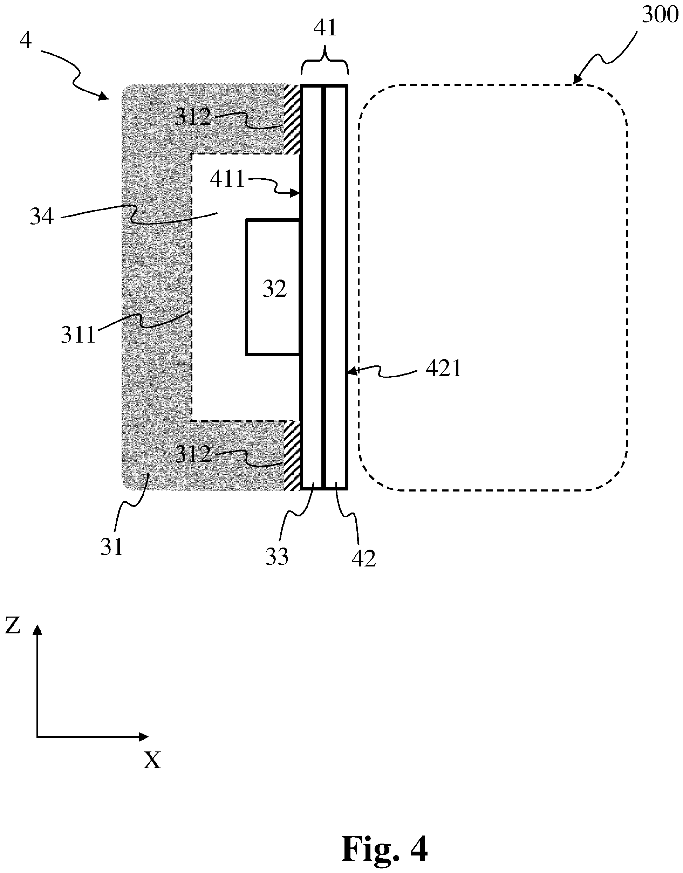

**Figure 4** illustrates a schematic fragmentary sectional view of a haptic unit 4, in accordance with an exemplary embodiment.

The haptic unit 4 is similar to the haptic unit 3 illustrated on figure 3. The haptic unit corresponds to an alternative embodiment of the haptic unit 3, elements common to the haptic unit 4 and haptic unit 3 being identified with the same reference numbers.

According to the alternative embodiment of figure 3, a second sheet 42 (forming the sheet element with the first sheet 33) is arranged on the outer surface 321 of the first sheet 33, the second sheet 42 interfacing the first sheet 33 (and the haptic actuator 32 consequently) with the user body part 300.

The second sheet 42 corresponds for example to the interface element 35 of figure 1, for example to the cover of the haptic device 10 coating the foam 31.

According to a variant, the second sheet 42 is an intermediate sheet between the first sheet 33 and the interface element 35.

The first sheet 33 and the second sheet 42 form a sheet stacking 41, i.e., a stacking of different layers, corresponding to the sheet element introduced in the descriptive part of figure 1.

According to a specific embodiment, an outer surface 421 of the second sheet is adapted to be in contact with the part of user's body and adhere with this part of user's body 300 to transmit the vibration effect generated by the haptic actuator 32 and the first sheet 33 to the user body part 300.

The size of the second sheet 42 is for example equal to the size of the first sheet 33. The second sheet 42 is for example made in a material different from the material of the first sheet 33. The second sheet 42 is for example adjoined to the first sheet 33 by adhesive bonding or the first sheet 33 and second sheet 42 are made of co-laminated material.

The material of the second sheet 42 corresponds for example to one of the following materials: silicon, tissue, leather, plastic (e.g., PVC (Polyvinyl Chloride), PU (polyurethane) or PET (Polyethylene terephthalate)).

Such a stack 41 makes it possible to take advantage both of the mechanical properties like rigidity of the first material making up the first sheet 33 and of the surface properties like higher friction of the second material making up the second sheet 42 to maximize mechanical coupling with the skin. The material of the second sheet 42 may for example match with the material of the coating covering the foam 31 of the haptic device 10, when appropriate, i.e., when the properties of the coating material allow sufficient adhesion to the skin to transmit the vibratory effect to the part of user's body 300.

**Figure 5** illustrates a schematic fragmentary sectional view of a haptic unit 5, in accordance with an exemplary embodiment.

Figure 5 corresponds to a sectional view of the haptic device 10 in the plane formed by X and Z axis of the orthonormal coordinate system (X,Y,Z) taken along axis 1-1 of figure 1.

Like the haptic unit 3 and the haptic unit 4 described with reference to figures 3 and 4, respectively, the haptic unit 5 comprises foam 31, into which is formed a cavity 34 corresponding to a recess or chamber dug or bored into the foam 31. The cavity 34 is opened at the face oriented toward the outside of the haptic device 10, i.e., the face oriented toward the body part 300.

The haptic unit 5 comprises a sheet element 51 that partially closes the opening. The element 51 corresponds to the first sheet 33 of the haptic unit 3 or to the sheet stacking 41 made of the first sheet 33 and the second sheet 42 of the haptic unit 4.

According to this exemplary embodiment, the sheet element 51 has no direct contact with the foam 31.

The sheet element 51 is adapted to transmit vibrations or displacements generated by the haptic actuator 32 to the part of user's body 300. The sheet element 51 is also configured to deform itself to adapt to the shape of the par of user's body 300 when the part of user's body 300 rests against the haptic unit 5.

The haptic unit 5 further comprises an elastic joint 52 (illustrated with vertical stripes) arranged along an inner contour of the opened cavity 34 on the side of the opening. The elastic joint 52 connects the foam 31 along opened cavity 34 inner contour to the sheet element 51 outer contour (which faces the opened cavity 34 inner contour of) to close the opening in a resting position of the sheet element 51, i.e., when the haptic actuator 32 is not operated and the sheet element 51 not moving.

The elastic joint 52 is made of a material that may be squeezed and/or stretched out according to the sheet element 51 displacement induced by the haptic actuator 32 when the haptic actuator 32 is operated to generate a haptic effect. The part of the joint connected to the foam 31 is nearly static while the part of the joint connected to the sheet element 51 follows the displacement or motion of the sheet element 51.

The elastic joint 52 isolates the sheet element 51 from the foam 31 and prevents or at least reduces the transmission of vibrations from the sheet element 51 to the foam 31.

According to a first example, the elastic joint 52 is only attached or fixed to the foam 31, for example by adhesive bonding, and not to the outer contour of the sheet element 51.

According to a second example, the elastic joint 52 is only attached or fixed to the outer contour of the sheet element 51, for example by adhesive bonding, and not to the foam 31.

According to a third example, the elastic joint 52 is attached or fixed to both the foam 31 and to the sheet element 51 outer contour, for example by adhesive bonding.

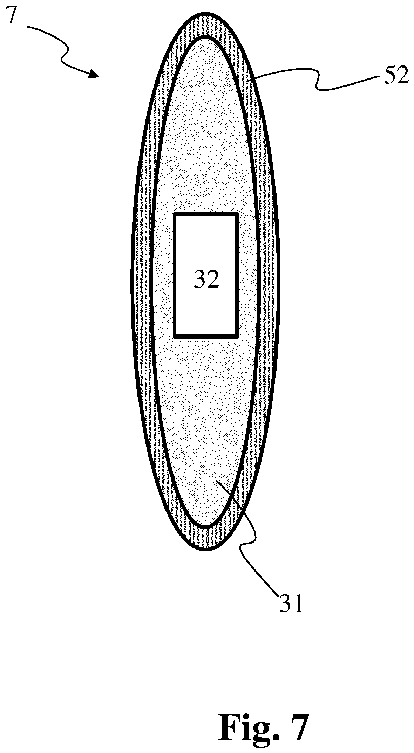

**Figure 7** shows a schematic view of an assembly 6 comprising the sheet element 51 surrounded by the elastic joint 52, the haptic actuator 32 being arranged at the center of the sheet element 51. The assembly 6 is illustrated on figure 6 as seen from the inside of the cavity 34.

According to the exemplary embodiment of figure 5, the sheet element 51 is mechanically linked to the foam 31 via one or more flexible elements 53, 54 acting as interface elements interfacing the sheet element 51 to the foam (31).

A first tip or end of each flexible element 53, 54 is fastened to the inner surface 511 of the sheet element 51 and a second tip or end, opposite to the first end, is anchored into the foam 31, each flexible element 53, 54 extending into the opened cavity 34 from the inner surface 511.

According to a variant, the second end of each flexible element is attached to the inner surface of the cavity, i.e., to the foam 31, by adhesive bonding without entering into or penetrating the foam 31. An enlarged basis can be managed at each flexible element tip in order to increase contact surface and improve bonding quality.

According to a non-limiting example embodiment, the flexible elements 53, 54 extend into the opened cavity 34 from the inner surface 511 of the sheet element 51 orthogonally to the inner surface 511.

According to another example, a first end of the flexible element 53, 54 is attached to the inner surface 511 of the sheet element 51 and the second end of the flexible element 53, 54 is attached to a wall forming the cavity 34 that is essentially orthogonal to a plane of the opening.

2, 3 or 4 flexible elements are for example provided to hang the sheet element 51 on the foam 31. The flexible elements 53, 54 are for example distributed at a distance from the periphery of the sheet element 51, for example at equal distance from each other.

A flexible element 53, 54 may for example correspond to a stem or a rod.

According to another example, a flexible element 53, 54 may have a rectangular cross section.

According to a further example, the sheet element 51 is linked to the foam via only one flexible element. According to this example, the flexible element may correspond to a spring, the haptic actuator 32 being arranged inside the spring at the first end of the spring that is attached to the inner surface 511 of the sheet element 51.

The one or more flexible element 53, 54 are arranged so as to allow movement or displacement of the sheet element 51 relative to the foam 31 along one or more axes, that is to say along the X, Y and/or Z axis. The one or more flexible elements 53, 54 are elastically deformable according to the one or more X, Y and/or Z axis. The flexible elements 53, 54 may for example be squeezed or stretched out according to the one or more X, Y and/or Z axis to enable any displacement of the sheet element 51 under the action of the haptic actuator 32.

**Figure 6** illustrates the haptic unit 5 with a displacement of the sheet element 51.

According to the non-limiting example of figure 6, the haptic actuator 32 is running and generates a movement or translation of the sheet element 51 upwardly according to the Z axis, the displacement being represented with the dotted line arrow 61.

According to this example, the sheet element 51 moves along the axis, for example up and down alternatively, by reacting to haptic actuator 32 input. The displacement or motion of the sheet element 51 results on a flexible element 53, 54 tip translation that deforms the flexible elements 53, 54. When the haptic actuator 32 stop running, the sheet element 51 returns to its rest position under the effect of the flexible elements 53, 54, which are elastically deformable.

When the sheet element 51 moves upwardly, the upper part of the elastic joint 52 is squeezed and a gap 62 may appear between the lower part of the elastic joint and the contour of the sheet element 51 facing the lower part of the elastic joint 52, when the elastic joint 52 is not attached to the outer contour of the sheet element 51.

When the elastic joint 52 is attached to the outer contour of the sheet element 51, the upper part of the elastic joint 52 is squeezed when the sheet element 51 moves upwardly, and the lower part of the elastic joint 52 is stretched out.

The elastic joint 52 acts as a vibration absorber and reduces or prevents the transmission of the vibration to the foam 31, the vibrational effect generated by the haptic actuator 32 being transmitted to the user body part 300 in the best possible manner.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, elements, and/or components but do not preclude the presence or addition of one or more other features, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A haptic device (10) comprising a set of haptic actuators, wherein said set of haptic actuators comprises at least a pair of haptic actuators comprising a first haptic actuator (21) and a second haptic actuator (22), said first and second haptic actuators (21, 22) being arranged inclined relative to one another at a determined angle,
said haptic device (10) further comprising a first sheet element (211; 51) associated with said first haptic actuator (21) and a second sheet element (221; 51) associated with said second haptic actuator (22), said first sheet element (211; 51) being independent from said second sheet element (221; 51),
said first sheet element (211; 51) being configured to transmit a first effect rendered by said first haptic actuator (21) to a first body part and said second sheet element (221; 51) being configured to transmit a second effect rendered by said second haptic actuator (22) to a second body part.

2. The haptic device (10) according to claim 1, wherein said first and second haptic actuators (21, 22) being at a distance from each other,
said first haptic actuator (21) having a first actuating axis (210), said second haptic actuator (22) having a second actuating axis (220), said first actuating axis (210) intersecting with said second actuating axis (220) to form said determined angle,
said first and second haptic actuators being arranged symmetrically one to each other with regard to a bisector (200) of said determined angle.

3. The haptic device (10) according to claim 2, wherein said first actuating axis (210) forming a first angle with said bisector (200), said second actuating axis (220) forming a second angle with said bisector (200), said first angle and said second angle being adjacent angle each comprised between 40° and 50°.

4. The haptic device (10) according to one of claims 1 to 3, wherein said first haptic actuator (21) and said second haptic actuator (22) are horizontally aligned.

5. The haptic device (10) according to one of claims 1 to 4, wherein said first sheet element (211; 51) and said second sheet element (221; 51) each comprising a first face and a second face opposite to said first face,
said first face of said first sheet element (211; 51) being fixed to said first haptic actuator (21) and said second face of said first sheet element (211; 51) being configured to be in contact with said first body part and adhere with said first body part,
said first face of said second sheet element (221; 51) being fixed to said second haptic actuator (22) and said second face of said second sheet element (221; 51) being configured to be in contact with said second body part and adhere with said second body part.

6. The haptic device (10) according to one of claims 1 to 5, wherein said haptic device comprising foam (31) configured to support a set of body parts comprising said first and second body parts, said first and second haptic actuators (21, 22) being each arranged in an opened cavity (34) formed into said foam (31), said opened cavity (34) having an opening oriented toward the outside of said haptic device (10), at least a part of said opening being closed with each sheet element of said first and second sheet elements (211, 221; 51).

7. The haptic device (10) according to claim 6, wherein said first and second sheet elements are each fixed to an interface element (35; 53, 54) interfacing said first and second sheet elements with said foam (31).

8. The haptic device (10) according to claim 6 or 7, wherein an elastic joint (52) is arranged along an inner contour of said opened cavity (34) on a side of said opening, said elastic joint (52) joining an inner contour of said opened cavity (34) to an outer contour of said each sheet element (51) in a resting position of said sheet element (41).

9. The haptic device according to claim 8, wherein said interface element and said elastic joint (52) are configured to allow a displacement of said each sheet element (51) between said resting position and an activation position, said displacement being generated by a movement of each haptic actuator.

10. The haptic device (10) according to one of claims 1 to 9, wherein said first and second haptic actuators (21, 22) each corresponds to a vibrotactile actuator.

11. The haptic device (10) according to one of claims 1 to 10, wherein said first and second body parts correspond to a same body part of a body model.

12. The haptic device (10) according to one of claims 1 to 11, wherein said first and second body parts each refer to a back of a user.

13. The haptic device (10) according to one of claims 1 to 12, wherein said haptic device corresponds to a chair, to a back rest, to a chair cover, to a back rest cover or to a haptic vest.
